# EUROPEAN PATENT APPLICATION

(11) **EP 4 768 755 A1**
(43) Date of publication of application: **01.07.2026**
(21) Application number: 24223818.6
(22) Date of filing: 31.12.2024
(51) Int. Cl.: F16H 57/04, F16H 57/08

(54) **PLANETARY CARRIER FOR A PLANETARY GEAR SET**

(71) Applicant: ZF Friedrichshafen AG, 88046 Friedrichshafen (DE)
(72) Inventor: Huang, Haihua, Shanghai, 201615 (CN); Ye, Cui, Shanghai, 201615 (CN); Sun, Jiabin, Shanghai, 201615 (CN); Zhang, Yechen, Shanghai, 201615 (CN)
(74) Representative: WBH Wachenhausen Patentanwälte PartG mbB

(57) **Abstract**

The present invention relates to a planetary carrier (20) for a planetary gear set (80). The planetary carrier (20) comprises an axle (22) configured for supporting a planet gear and having a first axial end (23) and a second axial end (24). The planetary carrier (20) comprises a frame (26) for supporting the axle (22). The axle (22) is joined to the frame (26) by being partially pressed into the frame (26). The frame (26) comprises a hole (28) with an abutment surface (30) for axially abutting the first axial end (23) of the axle (22) pressed into the hole (28). The invention also relates to a gearing (10) with the planetary carrier (20), to a vehicle (1) and to a method for assembling a planetary carrier (20).

## Description

### Technical field

The present disclosure relates to a planetary carrier, a gearing with such a planetary carrier, a vehicle with such a gearing or such a planetary carrier, and a method for assembling a planetary carrier.

### Prior art

It is known to use planetary gear sets in a gearing for a vehicle. In some cases, the planetary gear set may comprise a planetary carrier, on which multiple planet gears are rotatably mounted on respective axles. In some cases, a process of mounting the planet gears on the respective axles may be complicated. In addition, space may be insufficient for proper installation, and the strength of the axle may be low. Furthermore, it may be difficult to prevent or inhibit relative movement of the axle with respect to the planetary carrier.

### Summary of the invention

The present disclosure relates in a first aspect to a planetary carrier for a planetary gear set. The planetary gear set may be part of a gearing for a vehicle. Examples of the vehicle may include a car, a truck, a bus and a working vehicle. Examples for the working vehicle may include a tractor, a combine harvester, a communal vehicle like a street sweeping machine, an excavator, a grader and a loader. The vehicle may comprise a driving unit for directly or indirectly driving the gearing by applying power thereto. The driving unit may comprise an internal combustion engine and/or an electric motor. The driving unit may receive energy from an energy storage, for example a tank or a battery, and convert it to rotational mechanical energy, for example to a driving power for the gearing. The gearing may comprise an input shaft and one or more output shafts. At least one output shaft of the gearing may be operatively connected to a drive element of the vehicle. If two elements are operatively connected, the elements are directly or indirectly coupled to each other so that a movement of one element causes a reaction of the other element. An operative connection can be established, for example, by frictional engagement or geometric fit. The operative connection can correspond to a meshing between corresponding gears of the two elements. Further elements, such as shafts, constant velocity joints and/or one or more gear sets, may be present between the elements. The gearing may be provided as a distribution gearing for distributing power between two output shafts. The gearing may also comprise a differential function. The drive element may be, for example, a wheel for contacting the ground or a drive wheel or sprocket for tracks. The vehicle may comprise a shiftable transmission disposed in a power flow between the driving unit and the drive element.

The planetary carrier comprises an axle configured for supporting a planet gear and having a first axial end and a second axial end. The axle may be substantially cylindrically shaped. The axle may comprise a constant diameter. Alternatively, the axle may comprise multiple portions with different diameters. The first and second axial ends of the axle may relate to first and second ends of the axle along a central axis of the axle. The axle may be configured such that the planet gear can be rotatably supported thereon. For example, the axle may be configured to provide support for the planet gear itself and/or for a bearing supporting the planet gear. The planetary carrier further comprises a frame for supporting the axle. The frame may comprise an annular shape around its central axis. The axle is joined to the frame by being partially pressed into the frame. For example, the first end of the axle may be pressed into the frame. As a result, relative movement, for example an axial movement, of the axle with respect to the frame may be suppressed. In addition, the pressing may at least partially inhibit relative rotation between the axle and the frame around the central axis of the axle. A plurality of axles may be provided for a respective plurality of planet gears. For example, the planetary carrier may comprise six axles distributed around a circumferential direction of the frame. The plurality of axles may be distributed evenly or unevenly along the circumference of the frame. All axles may be configured the same. Alternatively, some of the axles may be configured differently from others of the axles.

The frame comprises a hole with an abutment surface for axially abutting the first axial end of the axle pressed into the hole. The hole may comprise a shape complementary to the shape of the axle, for example a cylindrical shape. A diameter of the hole may be slightly smaller than a diameter of the axle at the portion of the axle pressed into the hole so as to provide a press-fit. The abutment surface may be a surface facing towards the axle in a direction along the central axis of the axle. The abutment surface may be configured such that the first axial end of the axle abuts the abutment surface when being pressed in a pressing direction. The pressing direction may be a direction, in which the axle is pressed when being inserted into the frame and joined thereto. The pressing direction may be a direction along the central axis of the axle. Alternatively, the pressing direction may deviate from the central axis of the axle. The abutment surface may be configured to limit a movement of the axle in the axial direction towards the first axial end. In one example, the abutment surface may be provided as a stepped portion of the hole. For example, the hole may comprise two different diameters along the direction of the central axis of the axle. A small diameter portion may be provided further inwards in the pressing direction of the axle than a large diameter portion. In another example, the abutment surface may be provided as a stopper. The stopper may extend into the hole for providing the abutment surface. The stopper may be provided integrally with the frame or separately therefrom.

With the planetary carrier of the first aspect, a simple structure is provided, and assembly of the axle to the frame is simple. Furthermore, the press-fit between the axle and the frame inhibits relative movement of the axle with respect to the frame. In addition, the abutment surface provides a limit to the axial movement of the axle along its central axis. Accordingly, the axle supporting the planet gear can be firmly and simply fixed to the frame of the planetary carrier.

In an embodiment, the abutment surface is formed by a stepped portion of the hole. For example, the stepped portion may be formed as described above by providing two different diameters of the hole. Thereby, a simple structure is provided.

In an embodiment, the planetary carrier comprises a cover plate that is attached to the frame. The cover plate may be configured to at least partially cover the second axial end of the axle opposite to the first axial end. The portion of the cover plate at least partially covering the second axial end of the axle may serve as an additional abutment surface which can be abutted by the axle when the axle moves towards the second axial end. Accordingly, the cover plate may be configured to inhibit an axial movement of the axle in the direction of the second axial end. In one example, the cover plate may abut the second axial end of the axle in its attached state to the frame. Accordingly, the axial movement of the axle in the direction of the second axial end may be prevented. In another example, the cover plate may be spaced apart from the axle in the direction of the central axis of the axle. Thereby, overconstraint of the axle may be avoided while still providing a limit to the axial movement of the axle along its central axis. The cover plate may comprise an annular or substantially annular shape. The cover plate may be attached to the frame directly or indirectly. Examples for a direct attachment include joining the cover plate to the frame, for example by welding or adhering. Examples for an indirect attachment of the cover plate to the frame include an attachment via a fastening means. Examples for the fastening means include a screw, a bolt, a clip, a rivet, a pin, for example a dowel, and a retaining ring. The attachment of the cover plate to the frame may be configured as a releasable attachment or as a permanent attachment. In one embodiment, the cover plate is attached to the frame via screws. Thereby, a simple and releasable attachment is provided.

In one embodiment, the planetary carrier comprises a pin at least partly extending through the axle. The pin may be configured to inhibit rotation of the axle around the central axis of the axle. For example, the pin may extend at least partly through the axle and also at least partly through another component, for example the frame or the cover plate. For example, the pin may extend through the axle in a radial direction of the axle. For example, a hole for accommodating the pin may be formed in a circumferential surface of the axle. In one example, the pin may be formed as an element separate from the axle, the frame and the cover plate. The pin formed as a separate element may comprise a substantially cylindrical shape. In another example, the pin may be integrally formed with at least one of the axle, the frame and the cover plate. By extending at least partly through the axle and at least partly through another element, the pin may prevent or inhibit the rotation of the axle around its central axis. Thereby, the present embodiment is capable of inhibiting a relative rotation of the pin with respect to the frame with a simple structure.

In an embodiment, the pin is arranged at the second axial end of the axle. Thereby, interference of the press-fit for attaching the axle to the frame with the insertion of the pin can be avoided. Furthermore, accessibility to the pin for inserting the pin may be simple at the second axial end. For example, the pin may be arranged so as to intersect an axial end surface of the axle at the second axial end of the axle. Alternatively, the pin may be arranged between the first axial end and the second axial end of the axle at a location closer to the second axial end than to the first axial end. In one example, the pin may be arranged between the second axial end and a portion for mounting a planet bearing for the planet gear supported on the axle.

In an embodiment, the pin is configured to inhibit rotation by being inserted into a complementary opening formed in the frame. Thereby, the pin may extend partly through the axle and partly through the frame, such that relative movement and rotation of the pin with respect to the frame is prevented or inhibited. The complementary opening may have a shape complementary to an outer shape of the pin at the portion inserted into the frame. By means of the present embodiment, a simple structure is provided for preventing relative movement between the pin and the frame.

In an embodiment, the frame is monolithically provided with a bearing portion for accommodating and supporting a bearing of the planetary gear set. The frame and bearing portion may be casted together. The bearing portion of the frame may extend radially inwards from the axle towards a smaller diameter. The bearing portion may comprise a circumferential surface for contacting the bearing in a radial direction thereof and for receiving radial forces from the bearing. Alternatively or additionally, the bearing portion may comprise an axial surface for contacting the bearing in an axial direction thereof and for receiving axial forces from the bearing. In one example, the frame and the bearing portion may be monolithically formed by casting.

In an embodiment, the frame comprises a lubrication channel at least partly extending through the frame to the axle. The lubrication channel may be configured to receive lubricant from a lubricant supply. The lubricant may be provided for lubricating and/or cooling elements of the gearing. For example, the lubricant may comprise oil. The lubrication channel may extend through the frame in a radial direction and/or in an axial direction. For example, the lubrication channel may comprise a radially extending portion and an axially extending portion for guiding the lubricant to the axle. The axle may comprise a channel for guiding the lubricant. The channel of the axle may be configured for receiving lubricant from the lubrication channel of the frame. The channel may be configured to guide at least a part of the received lubricant to the planet gear. The channel of the axle may comprise multiple portions, for example an axially extending portion and a radially extending portion. The channel of the axle may be configured to guide a part of the lubricant to further components of the planetary gear set other than the planet gear. For example, the channel may be configured to guide the lubricant to a planet bearing, on which the planet gear is rotatably mounted on the axle.

In a second aspect, the present disclosure relates to a gearing. The gearing comprises a planetary carrier according to the first aspect. The respective advantages and further features can be taken from the description of the first aspect, wherein embodiments of the first aspect also form embodiments of the second aspect and vice versa.

In an embodiment, the gearing comprises a housing for accommodating elements of the planetary gear set. For example, the housing may be configured to accommodate and support rotating elements of the planetary gear set. The housing may also serve as a stationary member. The frame may be attached to the housing. For example, the frame may be attached to the housing by a fastening means configured as described above. In one example, the frame is attached to the housing by a plurality of screws. With the present embodiment, the gearing may be provided with a simple structure. Furthermore, in case the frame also includes the bearing portion described above, a separate attachment of the bearing portion to the housing may be omitted, thereby further simplifying the structure of the gearing.

In an embodiment, the gearing comprises a first planetary gear set and a second planetary gear set. The first planetary gear set may comprise at least a first element, a second element and a third element. The second planetary gear set may comprise at least a first element, a second element and a third element. An input shaft may be non-rotatably connected to the first element of the first planetary gear set. The second element of the first planetary gear set may be non-rotatably connected to a first output shaft. The third element of the first planetary gear set may be non-rotatably connected to the first element of the second planetary gear set. The second element of the second planetary gear set may be non-rotatably connected to a stationary member. The third element of the second planetary gear set may be non-rotatably connected to a second output shaft. In the present embodiment, the second element of the second planetary gear set is formed as the planetary carrier described above, namely the planet carrier comprising the frame and the axle.

A permanent non-rotatable connection is a connection in which the two elements are rigidly coupled together. The elements may be formed as separate elements connected to each other in a non-rotatable manner or integrally. A non-rotatable connection between two elements may also be established by a switching element, e.g. a clutch or a brake. The non-rotatable connection may be established when the switching element is actuated. The non-rotatable connection may be released when the switching element is no longer actuated.

The first, second and third elements, for example, may each be a sun gear, a planetary carrier or a ring gear of the respective planetary gear set. In one example, each first element of the planetary gear sets may be a sun gear, each second element of the planetary gear sets may be a planetary carrier and each third element of the planetary gear sets may be a ring gear. The ring gear of the first planetary gear set may be formed integrally with the sun gear of the second planetary gear set. Thereby, a gearing with compact dimensions can be provided. The respective planetary gear set may be a plus or a minus planetary gear set. Each of the planetary gear sets may have planetary gears that may be rotatably mounted on the respective planetary carrier of the one planetary gear set, for example via axles configured as described above. The planetary gears may mesh with both the sun gear and the ring gear of the respective planetary gear set.

In a third aspect, the present disclosure relates to a vehicle. The vehicle comprises a planetary carrier according to the first aspect or a gearing according to the second aspect. The respective advantages and further features can be taken from the description of the first aspect, wherein embodiments of the first aspect also form embodiments of the second aspect and vice versa.

In a fourth aspect, the present disclosure relates to a method for assembling a planetary carrier for a planetary gear set. The method may be provided for assembling the planetary carrier of the first aspect. The respective advantages and further features can be taken from the description of the first aspect, wherein embodiments of the first aspect also form embodiments of the second aspect and vice versa.

The method according to the fourth aspect may comprise multiple steps, which may be carried out in any order, as long as no technical contradiction arises. The method may comprise a step of providing an axle configured for supporting a planet gear and having a first axial end and a second axial end. The axle may be configured as described above with respect to the first aspect or in a different manner. The method may comprise a step of providing a frame for supporting the axle, the frame comprising a hole with an abutment surface. The frame, the hole and the abutment surface may be configured as described above with respect to the first aspect or in a different manner. The method may comprise a step of joining the axle to the frame by partially pressing the axle into the frame such that the abutment surface axially abuts the first axial end of the axle pressed into the hole. The pressing may be carried out by moving the axle in a pressing direction with sufficient force for overcoming friction in the hole and creating a press-fit between the axle and the hole of the frame. In an optional sub-step, planet gears and other elements, for example radial and/or axial bearings, may be mounted onto the axle during the pressing. For example, the frame may comprise a cutout for the elements to be mounted onto the axle, and the axle may traverse the cutout in the pressing direction before and during the pressing. Alternatively, the planet gears and other elements may be mounted onto the axle after the pressing.

In an embodiment, the method comprises a step of at least partially covering the second axial end of the axle by attaching a cover plate to the frame. The cover plate may be provided as described above with respect to the first aspect or in a different manner. Furthermore, the method may comprise an optional step of attaching the planetary carrier to a housing of a gearing as described above.

### Brief description of drawings

Figure 1 shows a vehicle with a gearing according to an embodiment of the present disclosure.
Figure 2 schematically shows a general layout of a gearing for the vehicle of Figure 1 according to an embodiment of the present disclosure.
Figure 3 schematically shows a cross-section of a planetary carrier according to an embodiment of the present disclosure.
Figure 4 schematically shows a disassembled perspective view of the planetary carrier of Figure 3.
Figure 5 schematically shows a cross-section of a frame of the planetary carrier of Figure 3 mounted to a housing.
Figure 6 schematically shows a method for assembling the planetary carrier of Figure 3.

### Detailed description of embodiments

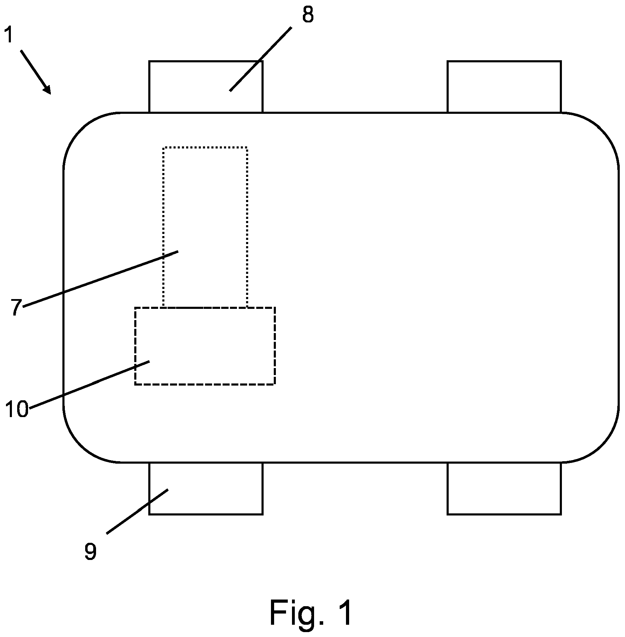

Figure 1 shows a vehicle 1 with a gearing 10 according to an embodiment of the present disclosure. The vehicle 1 comprises a driving unit 7 presently formed as an electric motor. The gearing 10 is configured for transferring power input by the driving unit 7 to at least two drive elements 8, 9 presently formed as wheels.

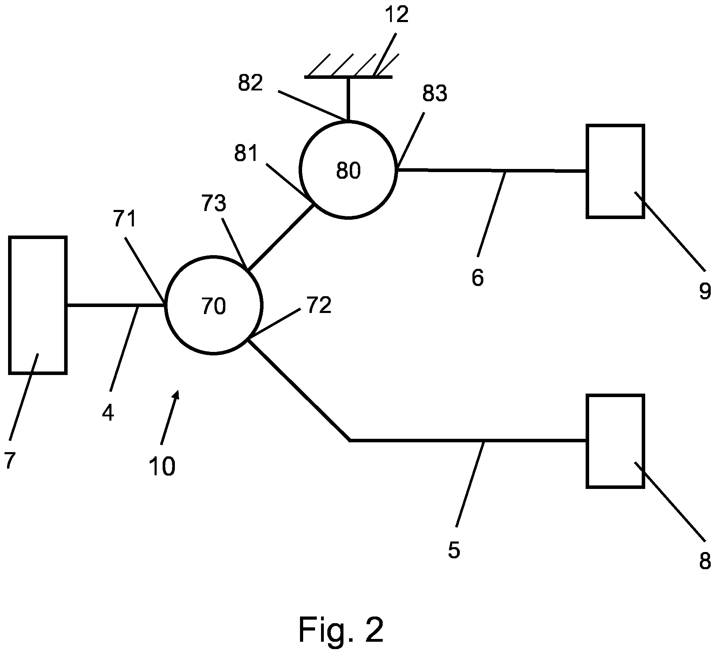

Figure 2 schematically shows a general layout of the gearing 10 of Figure 1 according to an embodiment of the present disclosure. In the present embodiment, the gearing 10 is formed as a distribution gearing with two planetary gear sets. As can be seen from Figure 2, the gearing 10 comprises a first planetary gear set 70 having a first element 71, a second element 72 and a third element 73. Furthermore, the gearing 10 comprises a second planetary gear set 80 having a first element 81, a second element 82 and a third element 83. Power generated by the driving unit 7 can be introduced into the gearing 10 via an input shaft 4. The input shaft 4 is operatively connected to the first element 71 of the first planetary gear set 70, here by being permanently non-rotatably connected. The third element 73 of the first planetary gear set 70 is permanently non-rotatably connected to the first element 81 of the second planetary gear set 80, here by being integrally formed. The second element 82 of the second planetary gear set 80 is permanently non-rotatably fixed to a stationary member 12, here a housing for accommodating and supporting the first and second planetary gear sets 70, 80. A first output shaft 5 is operatively connected to the second element 72 of the first planetary gear set 70, in this case permanently non-rotatably connected, for outputting power to a first drive element 8. A second output shaft 6 is operatively connected to the third element 83 of the second planetary gear set 80, in this case permanently non-rotatably connected, for outputting power to a second drive element 9.

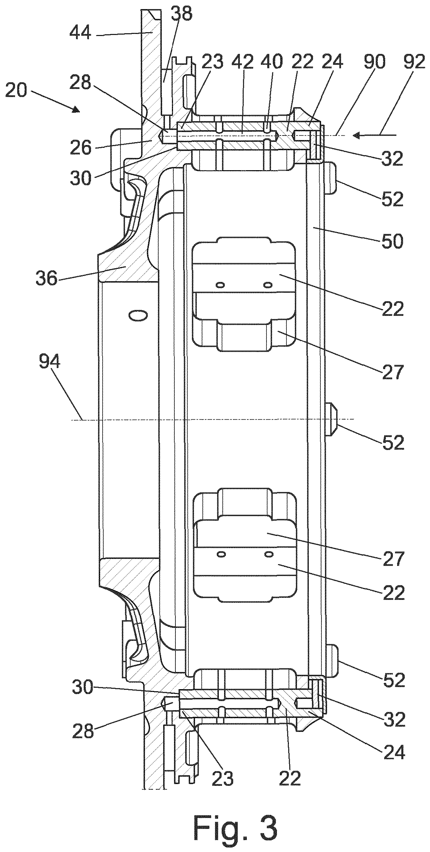

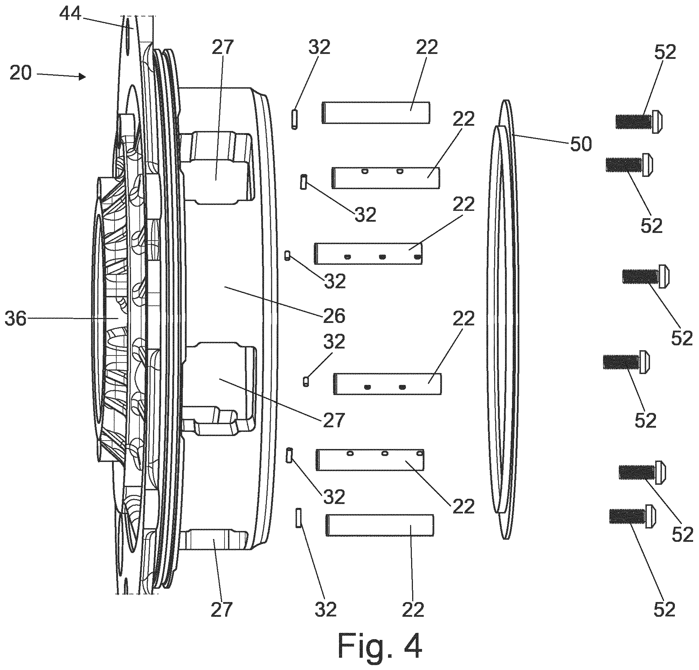

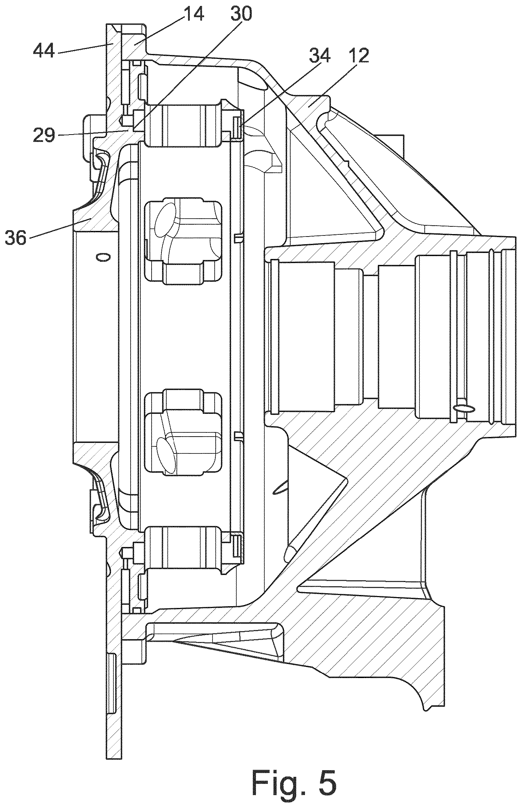

Figure 3 shows a planetary carrier 20 according to an embodiment of the present disclosure. Figure 4 schematically shows an exploded view of the planetary carrier 20 of Figure 3. Figure 5 shows a frame 26 of the planetary carrier 20 of Figure 3 mounted to a housing 12 of a gearing 10. The planetary carrier 20 is presently provided to be used as the second element 82 of the second planetary gear set 80 of Figure 2. The planetary carrier 20 comprises the frame 26 and an axle 22. In the present embodiment, the frame 26 is shaped as an annular member around a central axis 94 of the frame 26 (see Figure 3). In the present embodiment, a plurality of axles 22, namely six axles 22, are provided, as can be seen in Figure 4. The six axles 22 are evenly distributed in a circumferential direction around the central axis 94 of the annularly shaped frame 26.

The axle 22 has a cylindrical shape around a central axis 90 of the axle 22. The axle 22 has a first axial end 23 and a second axial end 24. In the view of Figure 3, the first axial end 23 is arranged on a left side of the axle 22, and the second axial end 24 is arranged on a right side of the axle 22. The frame 26 comprises a hole 28 and an abutment surface 30. In the present embodiment, the hole 28 is formed as a stepped hole with two different diameters forming a stepped portion 29, see Figure 5. The abutment surface 30 is formed as an axially facing surface of the stepped portion 29 of the hole 28. A cutout 27 is provided in a circumferential range of the frame 26 surrounding each axle 22. The cutout 27 is dimensioned for accommodating a planetary gear (not shown) and corresponding bearings and other elements to be mounted onto the axle 22. The axle 22 is presently attached to the frame 26 by being partly pressed thereinto, namely in a pressing direction 92 extending along the central axis 90 of the axle 22 (see Figure 3).

The planetary carrier 20 further comprises a pin 32 extending partly into the axle 22. Presently, each axle 22 is provided with a corresponding pin 32. In the present embodiment, the pin 32 is formed as a cylindrical pin, a part of which extends radially into the axle 22 at the second axial end 24 and another part extends into a complementary opening 34 formed in the frame 26. The complementary opening 34 is best visible in Figure 5. The planetary carrier 20 further comprises a cover plate 50. In the present embodiment, the cover plate 50 is annularly shaped and extends around the central axis 94 of the frame 26 (see Figures 3 and 4). The cover plate is attached to the frame 26 via multiple screws 52, namely six screws 52 (see Figure 4). The frame 26 presently comprises a bearing portion 36 extending radially inwards from the annular portion of the frame 26. The bearing portion 36 comprises a circumferential surface for accommodating and supporting a bearing (not shown). The frame 26 presently also comprises a flange portion 44 extending radially outward from the area of the frame 26 where the axles 22 are provided. The flange portion 44 is configured for attachment to another flange portion 14 formed in the housing 12, see Figure 5. In the present embodiment, the flange portions 14, 44 are connected by means of screws (not shown) for attaching the frame 26 to the housing 12 of the gearing 10.

The frame 26 comprises a lubrication channel 38 for supplying lubricant to the axle 22 (see Figure 3). In the present embodiment, the lubrication channel 38 extends in a radial direction and opens into the hole 28, into which the axle 22 is pressed. The lubrication channel 38 receives lubricant from a lubricant supply (not shown) and guides the lubricant to the axle 22. The axle 22 receives the lubricant by means of an axially extending channel 42 and guides the received lubricant towards the planet gear and its bearing via a plurality of radially extending channels 40. Thereby, the planet gear and the planet bearing for rotatably supporting the planet gear on the axle 22 can be properly lubricated.

In the planetary carrier 20 according to the present embodiment, the axle 22 is joined to the frame 26 by pressing, whereby relative movement between the frame 26 and the axle 22 is inhibited. Furthermore, the first axial end 23 of the axle 22 abuts the abutment surface 30, thereby limiting axial movement of the axle 22 in the direction towards the first axial end 23. In addition, the second axial end 24 of the axle 22 abuts the cover plate 50, thereby limiting the axial movement of the axle 22 towards the second axial end 24. Further still, the pin 32 is provided so as to inhibit relative rotation between the axle 22 and the frame 26. Accordingly, all possible axial and rotational movements of the axle 22 relative to the frame 26 of the planetary carrier 20 are limited or inhibited.

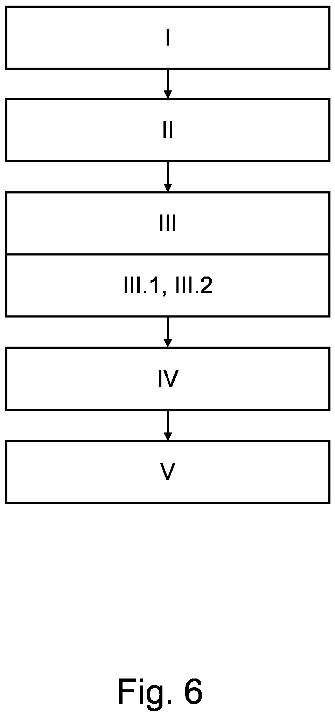

Figure 6 shows schematically a method for assembling the planetary carrier 20 of the embodiment of Figures 3 to 5. The steps may be carried out in any technically feasible order and are enumerated here only for the sake of unambiguousness. In a first assembly step I, the axle 22 is provided as described above, namely as an axle configured for supporting the planet gear and having the first axial end 23 and the second axial end 24. In a second assembly step II, the frame 26 for supporting the axle 22 is provided as described above. The frame 26 provided in assembly step II comprises the hole 28 with the abutment surface 30. In a third assembly step III, the axle 22 is joined to the frame 26. In the present embodiment, the third assembly III comprises an optional sub-step III.1 of inserting a planet gear and a planet bearing in the cutout 27 and positioning them so as to be coaxial with the hole 28, into which the axle 22 is to be inserted. In a second sub-step III.2, the axle 22 is pressed into the hole 28 in the pressing direction 92 until the abutment surface 30 and the first axial end 23 of the axle 22 pressed into the hole 28 come into abutment. Thereby, the axle 22 is joined to the frame 26, and its axial movement in the direction of the first axial end 23 is limited by the abutment surface 30. In an optional fourth assembly step IV, the second axial end 24 of the axle 22 is at least partially covered by attaching the cover plate 50 to the frame 26. In the present embodiment, the cover plate 50 is attached by means of a plurality of screws 52, namely six screws 52. In an optional fifth assembly step V, the planetary carrier 20 is attached to the housing 12 of the gearing 10. In the present embodiment, this is carried out by aligning the flange portions 44, 14 and attaching the planetary carrier 20 to the housing 12 by means of a plurality of screws (not shown).

With the assembly method described above, the planetary carrier of the embodiment of Figures 3 to 5 can be obtained.

While a specific embodiment of the planetary carrier 20 was described with reference to Figures 3 to 5, the present disclosure is not limited thereto. For example, in an unshown further embodiment of the planetary carrier, the frame dies not comprise the hole 28, and the axle is joined to the frame in a different manner, for example by being welded or being integrally formed with the frame. In this unshown embodiment, the frame comprises the bearing portion 36 and the flange portion 44 for attachment to the housing 12. Accordingly, this unshown embodiment still achieves the advantage of a simple structure or connecting the bearing portion 36 to the housing 12 via the planetary carrier. In another unshown embodiment, the bearing portion may be provided separately from the frame and may be attached thereto.

### Reference signs

- 1: vehicle
- 4: input shaft
- 5, 6: output shaft
- 7: driving unit
- 8, 9: drive element
- 10: gearing
- 12: stationary member
- 14, 44: flange portion
- 20: planetary carrier
- 22: axle
- 23, 24: axial end
- 26: frame
- 27: cutout
- 28: hole
- 29: stepped portion
- 30: abutment surface
- 32: pin
- 34: complementary opening
- 36: bearing portion
- 38: lubrication channel
- 40, 42: channel
- 50: cover plate
- 52: screw
- 70, 80: planetary gear set
- 71, 81: first element
- 72, 82: second element
- 73, 83: third element
- 90, 94: central axis
- 92: pressing direction

- I, II, III, III.1, III.2, IV, V: assembly step

## Claims

1. A planetary carrier (20) for a planetary gear set (80), comprising an axle (22) configured for supporting a planet gear and having a first axial end (23) and a second axial end (24), and a frame (26) for supporting the axle (22), wherein the axle (22) is joined to the frame (26) by being partially pressed into the frame (26), wherein the frame (26) comprises a hole (28) with an abutment surface (30) for axially abutting the first axial end (23) of the axle (22) pressed into the hole (28).

2. The planetary carrier (20) according to claim 1, **characterized in that** the abutment surface (30) is formed by a stepped portion (28) of the hole (28).

3. The planetary carrier (20) according to claim 1 or 2, **characterized by** comprising a cover plate (50) that is attached to the frame (26) and is configured to at least partially cover the second axial end (24) of the axle (22) opposite to the first axial end (23).

4. The planetary carrier (20) according to claim 3, **characterized in that** the cover plate (50) is attached to the frame (26) via screws (52).

5. The planetary carrier (20) according to any one of the preceding claims, **characterized by** comprising a pin (32) at least partly extending through the axle (22) and being configured to inhibit rotation of the axle (22) around a central axis (90) of the axle (22).

6. The planetary carrier (20) according to claim 5, **characterized in that** the pin (32) is arranged at the second axial end (24) of the axle (22).

7. The planetary carrier (20) according to claim 6, **characterized in that** the pin (32) is configured to inhibit rotation by being inserted into a complementary opening (34) formed in the frame (26).

8. The planetary carrier (20) according to any one of the preceding claims, **characterized in that** the frame (26) is monolithically provided with a bearing portion (36) for accommodating and supporting a bearing of the planetary gear set (80).

9. The planetary carrier (20) according to any one of the preceding claims, **characterized in that** the frame (26) comprises a lubrication channel (38) at least partly extending through the frame (26) to the axle (22) and **in that** the axle (22) comprises a channel (40; 42) for guiding the lubricant to the planet gear.

10. A gearing (10) for a vehicle (1) comprising a planetary gear set (80) with the planetary carrier (20) according to any one of the preceding claims.

11. The gearing (10) according to claim 10, **characterized by** comprising a housing (12) for accommodating elements of the planetary gear set (80), wherein the frame (26) is attached to the housing (12).

12. The gearing (10) according to claim 10 or 11, **characterized in that** the gearing (10) comprises a first planetary gear set (70) and a second planetary gear set (80), wherein the first planetary gear set (70) comprises at least a first element (71), a second element (72) and a third element (73) and the second planetary gear set (80) comprises at least a first element (81), a second element (82) and a third element (83), wherein an input shaft (4) is non-rotatably connected to the first element (71) of the first planetary gear set (70), the second element (72) of the first planetary gear set (70) is non-rotatably connected to a first output shaft (5), the third element (73) of the first planetary gear set (70) is non-rotatably connected to the first element (81) of the second planetary gear set (80), the second element (82) of the second planetary gear set (80) is non-rotatably connected to a stationary member (12), and the third element (83) of the second planetary gear set (80) is non-rotatably connected to a second output shaft (6), wherein the second element (82) of the second planetary gear set (80) is formed as the planetary carrier (20).

13. A vehicle (1) comprising a planetary carrier (20) according to any one of claims 1 to 9 or a gearing (10) according to any one of claims 10 to 12.

14. A method for assembling a planetary carrier (20) for a planetary gear set (80) comprising:
- providing (I) an axle (22) configured for supporting a planet gear and having a first axial end (23) and a second axial end (24),
- providing (II) a frame (26) for supporting the axle (22), the frame (26) comprising a hole (28) with an abutment surface (30), and
- joining (III) the axle (22) to the frame (26) by partially pressing the axle (22) into the frame (26) such that the abutment surface (30) axially abuts the first axial end (23) of the axle (22) pressed into the hole (28).

15. The method according to claim 14, **characterized by** comprising at least partially covering (IV) the second axial end (24) of the axle (22) by attaching a cover plate (50) to the frame (26).
